# EUROPÄISCHE PATENTSCHRIFT

(11) **EP 3 437 470 B1**
(45) Veröffentlichungstag und Bekanntmachung des Hinweises auf die Patenterteilung: **06.10.2021**
(21) Anmeldenummer: 18186795.3
(22) Anmeldetag: 01.08.2018
(51) Int. Cl.: A01M 7/00

(54) **FELDSPRITZE MIT AUSBRINGAUSLEGER**
FIELD SPRAYER WITH SPREADER BOOM
PULVÉRISATEUR AGRICOLE AVEC BRAS DE PULVÉRISATEUR

(30) Priorität: 03.08.2017 DE 102017117640
(43) Veröffentlichungstag der Anmeldung: 06.02.2019
(73) Patentinhaber: LEMKEN GmbH & Co. KG, 46519 Alpen (DE)
(72) Erfinder: Surborg, Carsten, 46519 Alpen (DE); Klaas, Manuel, 48720 Rosendahl (DE); Surmann, Klemens, 59227 Ahlen (DE)
(74) Vertreter: Hoffmann Eitle

(56) Entgegenhaltungen:
- EP-B1- 1 293 115
- FR-A1- 2 965 454
- US-A1- 2006 219 809

## Beschreibung

### TECHNISCHES GEBIET

Die vorliegende Erfindung betrifft eine Feldspritze. Die Feldspritze ist als eigenständiges Fahrzeug oder Anhänger vorgesehen und umfasst insbesondere einen Dreh-Hebemechanismus und einen Ausbringausleger, wobei der Dreh-Hebemechanismus dazu geeignet ist, den Ausbringausleger anzuheben und abzusenken und zu drehen. Weiterhin betrifft die vorliegende Erfindung einen Ausbringausleger, der aus mehreren einzelnen Elementen gebildet ist, die um Achsen ausgeschwenkt werden können, wobei zumindest einige der Achsen zueinander in unterschiedlichen Winkeln angeordnet sind.

### STAND DER TECHNIK

Es ist eine Feldspritze bekannt, die einen Rahmen und einen Ausbringausleger aufweist. Der Rahmen ist über einen Hebemechanismus mit dem Ausbringausleger verbunden. Der Hebemechanismus ist so ausgebildet, dass zwei Hydraulikzylinder einen Trägerarm, der an einem Ende drehbar mit dem Rahmen der Feldspritze und an seinem anderen Ende drehbar mit dem Ausbringausleger verbunden ist, so anheben und absenken können, dass sich der Anstellwinkel des Ausbringauslegers gegenüber dem Rahmen nicht ändert, wenn eine Bewegung nach oben oder unten ausgeführt wird.

EP 1 293 115 B1 (dort Fig. 3) zeigt einen Hebemechanismus des Stands der Technik mit einer hydraulischen Parallelführung eines Verteilergestänges Der Hebemechanismus erlaubt allerdings kein Drehen des Verteilergestänges um ein Ende des Hebearms von einer Arbeits- in eine Transportstellung. Darüber hinaus zeigt die EP 1 293 115 B1 keinen Ausbringausleger, bei dem eine Gelenkachse im Wesentlichen senkrecht zur einer Gierachse der Feldspritze liegt und die Elemente in der Transportposition so angeordnet sind, dass die Gelenkachse im Wesentlichen parallel zu der Gierachse der Feldspritze angeordnet ist.

Weiterhin sind im Stand der Technik Ausbringausleger bekannt, die aus mehreren Segmenten bestehen. Um möglichst ressourceneffizient Pflanzenschutzmittel oder Düngemittel auf einem Feld auszubringen ist es bevorzugt, dass die Ausbringausleger eine möglichst große Spannweite haben, sodass eine maximale Fläche pro Überfahrt über einem Feld abgedeckt werden kann. Hierzu wurden Ausbringausleger entwickelt, die ausgeklappt werden können, um einen Transport auf öffentlichen Straßen sicherzustellen, da aus regulatorischen Gründen eine gewisse Maximalbreite nicht überschritten werden darf.

Die Ausbringausleger können in eine Transportstellung eingeklappt werden, sodass sie in Fahrzeugrichtung ausgerichtet sind. In einer Ausbringposition werden die Elemente der Ausbringausleger des Ausbringauslegers ausgeklappt, sodass das Fahrzeug eine Breite erhält, die im Straßenverkehr nicht zugelassen ist. In dieser Position sind jedoch beim Ausbringen auf einem Feld nur wenige Fahrten notwendig, um eine große Fläche zu bearbeiten. Mit zunehmender Länge des Ausbringauslegers (Breite des Fahrzeugs) tritt hier das Problem auf, dass die Elemente des Ausbringauslegers durch eine Gierbewegung instabil werden. Um dieses Problem zu lösen, wurden Ausbringausleger entwickelt, deren Schwenkachsen, um welche die einzelnen Elemente ausgeklappt werden, in einer Ausbringposition senkrecht zu der Gierachse der Feldspritze angeordnet sind. Ein Beispiel eines solchen Ausbringauslegers ist in DE 10 2009 059 111 B4 gezeigt. Um die Größe der benötigten Aktoren für ein Überführen der Feldspritze von einer Transportstellung in eine Arbeitsstellung gering zu halten, wird der Ausbringausleger, bevor dieser von einer Ausbringposition in eine Transportposition oder umgekehrt verfahren wird, um 90 gedreht, sodass die Aktoren, die den Ausbringausleger einschwenken oder ausschwenken, nicht gegen die Schwerkraft wirken müssen, sondern den Ausbringausleger in einer im Wesentlichen horizontalen Ebene ausschwenken können, die im Wesentlichen einen Normalenvektor parallel zur Schwerkraft aufweist.

Folglich ist es notwendig, am Hebemechanismus des Stands der Technik einen Drehmechanismus für den Ausbringausleger vorzusehen, um den Ausbringausleger, dessen Schwenkachsen in einer Ausbringposition senkrecht zur einer Gierachse der Feldspritze liegen, zu drehen, damit ein Überführen von einer Ausbringposition in eine Transportposition und umgekehrt in der vorgenannten Ebene erfolgen kann.

Es ist also bei einem solchen Ausbringausleger notwendig, den Hebemechanismus mit einem weiteren Bauteil auszustatten. Dies führt dazu, dass der Hebemechanismus zunächst größere Lasten anheben und absenken muss und zudem die gesamte Feldspritze schwerer wird, sodass weniger Zuladung für Pflanzenschutzmittel oder Dünger etc. zur Verfügung steht.

### DARSTELLUNG DER ERFINDUNG

Vor dem Hintergrund des Standes der Technik besteht eine Aufgabe der vorliegenden Erfindung darin, einen Mechanismus bereitzustellen, der dazu geeignet ist, den Ausbringausleger sowohl anzuheben als auch abzusenken und gleichzeitig oder zweitzeitig eine Drehung des Ausbringauslegers durchzuführen, möglichst ohne dabei eine Zunahme der Masse der Feldspritze oder der zu hebenden Lasten in Kauf nehmen zu müssen. Ferner besteht eine Aufgabe der vorliegenden Erfindung darin, einen Ausbringausleger bereitzustellen, der eine gegenüber dem Stand der Technik weniger ausladende Transportposition aufweist, sodass der Ausbringausleger aus mehreren Elementen bestehen kann und damit eine weitaus größere Spannweite in seiner Ausbringposition aufweist.

Diese Aufgabe wird durch eine Feldspritze gemäß Anspruch 1 gelöst. Vorteilhafte Ausgestaltungen der Erfindung ergeben sich aus den Unteransprüchen.

Eine erfindungsgemäße Feldspritze umfasst einen Ausbringausleger und einen Rahmen. Der Ausbringausleger kann zwischen einer Ausbringposition und einer Transportposition verfahren werden. Der Ausbringausleger umfasst mehrere Elemente, wobei zumindest zwei benachbarte Elemente über zumindest ein Gelenk mit einer Gelenkachse zueinander verschwenkbar miteinander verbunden sind. Der Ausbringausleger ist über einen Dreh-Hebemechanismus mit dem Rahmen verbunden, wobei der Dreh-Hebemechanismus einen Arm, an dessen ersten Ende der Rahmen der Feldspritze angeordnet ist und an dessen zweiten Ende der Ausbringausleger angeordnet ist, einen ersten Aktor, der mit dem Arm und dem Rahmen verbunden ist, und einen zweiten Aktor umfasst, der mit dem Ausbringausleger verbunden ist, sodass eine Betätigung des ersten Aktors das zweite Ende des Arms relativ zu dem Rahmen anheben oder absenken kann. Die mehreren Elemente sind in der Ausbringposition so ausgeschwenkt, dass die Gelenkachse im Wesentlichen senkrecht zu einer Gierachse der Feldspritze liegt und die mehreren Elemente in der Transportposition sind so angeordnet, dass die Gelenkachse im Wesentlichen parallel zu der Gierachse der Feldspritze angeordnet ist. Ein Betätigen des zweiten Aktors kann den Ausbringausleger um das zweite Ende des Arms drehen, sodass der Ausbringauslegers durch Betätigen des zweiten Aktors zu der Ausbringposition und der Transportposition gedreht werden kann.

Durch diese Feldspritze ist ein zusätzlicher Drehmechanismus, der an dem Hebemechanismus angebracht ist, nicht notwendig, weil der Hebemechanismus so ausgestaltet ist, dass die Drehung durch Betätigen eines bereits für den Hebemechanismus vorhandenen Aktors ausgeführt wird.

Im vorliegenden Zusammenhang bedeutet der Begriff "Ausbringposition" eine Position, in welcher der Ausbringausleger vollständig ausgeklappt ist, sodass das Fahrzeug eine maximale Breite aufweist, wobei die Breite hier die Ausdehnung quer zur Vorschubrichtung der Feldspritze ist. Weiterhin ist der Ausbringausleger in der Ausbringposition so angeordnet, dass die Schwenkachsen der innenliegenden Elemente des Ausbringauslegers senkrecht zu einer Gierachse der Feldspritze liegen.

Der Begriff "Gierachse" bedeutet vorliegend eine Achse der Feldspritze, die vertikal von oben nach unten gerichtet ist. Gierbewegungen, Gierbeschleunigungen und Gierkräfte werden auf die Feldspritze und damit auf den Ausbringausleger im Wesentlichen durch Lenkbewegungen und Unebenheiten des Bodens aufgeprägt. Durch ein Ausrichten zumindest einiger der Achsen der Gelenke, welche die Elemente des Ausbringauslegers verbinden, kann eine Instabilität in dem Ausbringausleger durch eine auf die Feldspritze aufgebrachte Gierbewegung/- beschleunigung/-kraft verhindert werden und die Präzision bei der Anwendung der Feldspritze nimmt zu.

Der Begriff "Transportposition" bezeichnet vorliegend eine Position, bei welcher der Ausbringausleger so an die Feldspritze angelegt ist, dass die Feldspritze eine minimale Breite aufweist, und damit für Transportfahrten auf öffentlichen Straßen, beispielsweise zwischen Feldern oder zwischen Zielgebiet und Hof, bewegt werden kann. Der Dreh-Hebemechanismus der Feldspritze ist ähnlich einer Parallelführung, bei der sich der Winkel zwischen Werkzeug (Ausbringausleger) und Boden während des Hebens kaum ändert, ausgestaltet. Dies ermöglicht ein Ausbringen unabhängig von der Höhe der auf dem Feld befindlichen Bepflanzung, sodass je nach dem, was auf dem Feld ausgesät wurde oder zu welchem Zeitpunkt im Wachstumsverlauf die Feldspritze verwendet wird, die Höhe des Ausbringauslegers immer optimal eingestellt werden kann, um ein möglichst effizientes Verteilen zu gewährleisten.

Zusätzlich zu dieser Parallelführung erlaubt die erfindungsgemäße Feldspritze eine Schwenkbewegung durch den zweiten Aktor um das zweite Ende des Arms, an welchem der Ausbringausleger drehbar angebracht ist, sodass eine Drehung des Ausbringauslegers um einen Querachse parallel zur Radachse des Fahrzeugs (d.h. der Feldspritze) möglich ist was eine Drehung des Ausbringauslegers zwischen der Ausbringposition und der Transportposition erlaubt.

Der zweite Aktor, der an einem Ende mit dem Ausbringausleger verbunden ist, kann an dem Rahmen der Feldspritze oder auch an dem Arm angebunden sein, um die Drehung oder Parallelführung des Ausbringauslegers zu ermöglichen.

Es ist bevorzugt, dass der Arm und der zweite Aktor so mit dem Ausbringausleger verbunden sind, dass der maximale Drehwinkel dieser Drehung zumindest ungefähr 90 , bevorzugt etwa 105 , beträgt.

Durch eine Drehbewegung über einen Drehwinkel von 90 hinaus kann einerseits sichergestellt werden, dass auch bei der Verwendung der Feldspritze an Hängen, wo die Feldspritze abwärts oder aufwärts fährt, und an Übergängen zu solchen Hängen die Düsen des Ausbringauslegers optimal zum Boden ausgerichtet sind, sodass ein Ausbringen effizient und gleichmäßig erfolgen kann, sodass weniger Ausbringgut verwendet werden muss und dadurch die Feldspritze umweltschonend angewendet werden kann. Zusätzlich ermöglicht ein Schwenken über 90 hinaus, dass zumindest ein Teil der Schwenkachsen des Ausbringauslegers senkrecht zur Schwerkraftrichtung oder parallel zu einer von der Feldspritze befahrenen Fläche nachgeführt werden können, sodass die Stabilität des Ausbringauslegers auch bei starken Hangneigungen erhalten bleibt.

Es ist weiter bevorzugt, dass der Dreh-Hebemechanismus mit mindestens einem Sensor und einer Steuerung ausgestattet ist, wobei die Steuerung auch in der Feldspritze oder in einem Zugfahrzeug für eine Feldspritze bereitgestellt sein kann, sodass die Steuerung anhand der Messwerte des Sensors einen Neigungswinkel des Ausbringauslegers unter Verwendung des ersten oder zweiten Aktors anpassen kann, sodass zumindest einige der Gelenkachsen der Gelenke zwischen den Elementen des Ausbringauslegers senkrecht zur Schwerkraftrichtung oder parallel zur befahrenen Fläche angeordnet sind.

Als Sensor kommen verschiedene Einrichtungen zum Bestimmen des Neigungswinkels in Betracht. Zum Beispiel kann ein Winkelsensor an den Drehgelenken des Arms zwischen Arm und Rahmen oder auch zwischen Arm und Ausbringausleger angebracht sein, sodass dieser Sensor einen Drehwinkel an den jeweiligen Gelenken bestimmt, sodass der Winkel des Ausbringauslegers relativ zum Rahmen berechnet werden kann.

Alternativ und zusätzlich kann am Rahmen ein Beschleunigungssensor angebracht werden, sodass die Neigung des Rahmens relativ zur Schwerkraft (z.B. Neigung des Hangs) bestimmt werden kann, wodurch ein Nachführen des Winkels des Ausbringauslegers auf Grundlage des gemessenen Hangneigungswinkels realisiert werden kann. Alternativ und zusätzlich kann auch ein Beschleunigungssensor an dem Ausbringausleger angebracht sein, sodass die Winkelposition des Ausbringauslegers relativ zur Schwerkraft bestimmt wird.

Alternativ und zusätzlich kann eine Wegmessung an den Aktoren erfolgen, sodass über die jeweilige Stellposition des Aktors der Winkel des Ausbringauslegers relativ zu dem Rahmen der Feldspritze bestimmt werden kann.

Es ist bevorzugt, dass der erste und/oder zweite Aktor als ein Hydraulikzylinder oder Stellmotor ausgebildet ist/sind.

Es ist bevorzugt, dass, nachdem die Feldspritze in ihre Ausbringposition gebracht wurde, der erste und zweite Aktor in eine Gleichlaufschaltung gebracht werden, sodass eine Parallelführung des Ausbringauslegers realisiert wird, wenn die Höhe des Ausbringauslegers durch Betätigen des ersten Aktors verändert wird, damit der Ausbringausleger optimal zum Pflanzenbestand ausgerichtet werden kann.

Bevorzugt ist der zweite Aktor als ein Doppelzylinder oder Schwimmkolbenzylinder ausgeführt. Diese Ausgestaltung hat sich als besonders effizient und zuverlässig für den Betrieb im Dreh-Hebemechanismus herausgestellt.

Bevorzugt umfasst der Ausbringausleger zumindest vier Elemente, wobei zumindest zwei benachbarte innenliegende Elemente über zumindest ein Gelenk mit einer Gelenkachse zueinander verschwenkbar miteinander verbunden sind und wobei die jeweils weiter außen liegenden oder die äußersten Gelenkachsen senkrecht zu den weiter innen liegenden Gelenkachsen ausgerichtet sind.

Der Ausbringausleger kann je nach Auslegung bevorzugt fünf, sechs, sieben oder acht Elemente aufweisen. Im Fall einer ungeraden Elementeanzahl wird ein Mittelelement vorgesehen, an dem beidseitig eine jeweils gleiche Zahl an verschwenkbaren Elementen angeordnet sind.

Weitere Vorteile der Erfindung ergeben sich aus der Gesamtheit der Patentansprüche und der nachfolgenden Figurenbeschreibungen.

### KURZE FIGURENBESCHREIBUNG

Figur 1 zeigt eine Feldspritze in einer Ausbringposition, d.h. mit ausgeklapptem Ausbringausleger.
Figur 2 zeigt eine Feldspritze in Transportposition, d.h. mit angelegtem Ausbringausleger.
Figur 3 zeigt einen Dreh-Hebemechanismus, wobei der Ausbringausleger in eine Ausbringposition gedreht ist.
Figur 4 zeigt einen Dreh-Hebemechanismus, wobei der Ausbringausleger in eine Transportposition gedreht ist.

### WEGE ZUR AUSFÜHRUNG DER ERFINDUNG

In den eine bevorzugte Ausführungsform der Erfindung darstellende Figuren werden gleiche Elemente durchgehend mit gleichen Bezugszeichen versehen. Es wird darauf verzichtet, diese Elemente für jede Figur neu zu beschreiben und stattdessen auf die Figurenbeschreibung der jeweils übergeordneten oder nachgeordneten Figuren verwiesen.

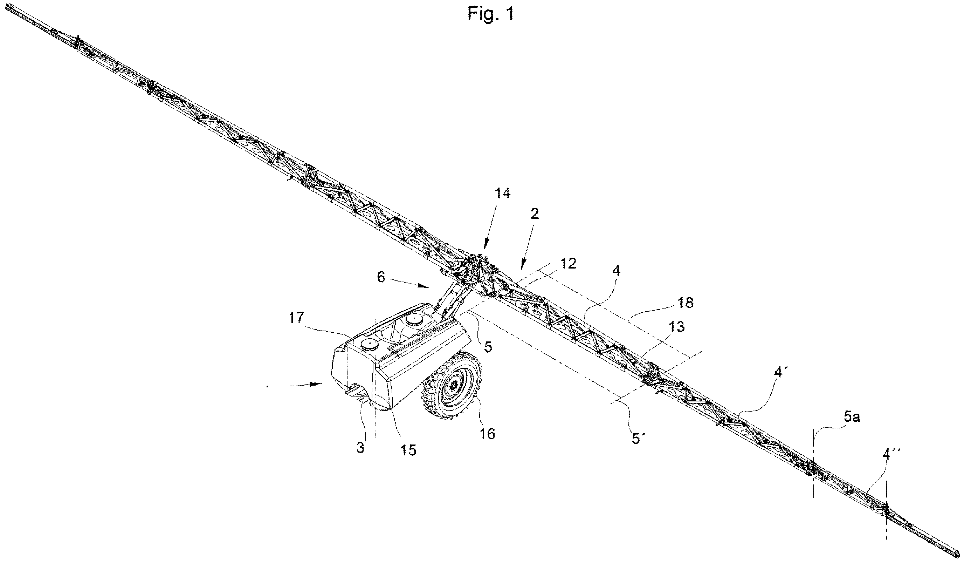

Figur 1 zeigt eine Feldspritze 1 mit einem Ausbringausleger 2, einem Dreh-Hebemechanismus 6 und einem Rahmen 3. Der Ausbringausleger 2 befindet sich in der Ausbringposition und weist einen Mittelteil 14 und Elemente 4, 4', 4" auf. In der Figur ist nur eine Seite des Ausbringauslegers mit Bezugszeichen versehen. Der Ausbringausleger 2 ist symmetrisch zum Mittelteil 14 ausgestaltet, sodass der für eine Seite beschriebene Aufbau an der gegenüberliegenden Seite gespiegelt vorliegt.

Der Ausbringausleger 2 weist in der bevorzugten Ausführungsform einen Mittelteil 14 und auf jeder Seite drei Elemente 4, 4' und 4" auf. Das erste Element 4 ist über ein Gelenk mit einer Gelenkachse 5 mit dem Mittelteil schwenkbar verbunden. An dem Element 4 ist über ein Gelenk mit einer Gelenkachse 5' das Elemente 4' angebracht. Die Gelenkachsen 5 und 5' sind senkrecht zu einer Gierachse 15 und einer Radachse 16 der Feldspritze 1 angeordnet.

In gestreckter Lage des Ausbringauslegers bilden die Unterseiten der Elemente 4,4' eine Ebene 18, in welcher auch die Gelenkachsen 5,5' liegen bzw. parallel zu ihr verlaufen.

Diese Anordnung in der Ausbringposition führt dazu, dass die Feldspritze 1 und insbesondere der Ausbringausleger 2 nicht durch Gierbewegungen, die durch ein Lenken oder Unebenheiten im Boden auf die Feldspritze 1 übertragen werden, anfängt zu schwingen. Dadurch ist die Stabilität des Ausbringauslegers 2 erhöht und gleichzeitig können die durch die Feldspritze 1 aufgebrachten Wirkstoffe gleichmäßiger und präziser auf dem Feld oder über dem Pflanzenbestand verteilt werden, sodass das Ausbringen von Wirkstoff effizienter ist.

Das äußerste Element 4" ist über ein Gelenk mit einer Achse 5a, die in der Ausbringposition parallel zur Gierachse 15 und orthogonal zur Radachse 16 der Feldspritze 1 angeordnet ist, verbunden. Durch dieser Anordnung ist das äußerste Element 4" anfälliger, durch eine Gierbewegung der Feldspritze 1 um die Achse 5a bewegt zu werden, die zu dem Gelenk gehört, welches die Elemente 4' und 4" verbindet. Dieser Nachteil ist jedoch für das letzte Element 4" weniger bedeutend, da die auf das Gelenk wirkende Kraft aufgrund der Länge des äußeren Elements 4" und der kleineren Ausgestaltung geringer als bei den Gelenken mit den Achsen 5, 5' ist.

Mit anderen Worten ausgedrückt, das auf das Gelenk mit der Achse 5a wirkende Moment ist nicht so groß wie zum Beispiel das Moment auf die Gelenken mit den Achsen 5 und 5', auf die im Falle einer Gierbewegung der Feldspritze 1 das Moment von drei Elementen 4, 4', 4" bzw. zwei Elementen 4', 4" wirkt.

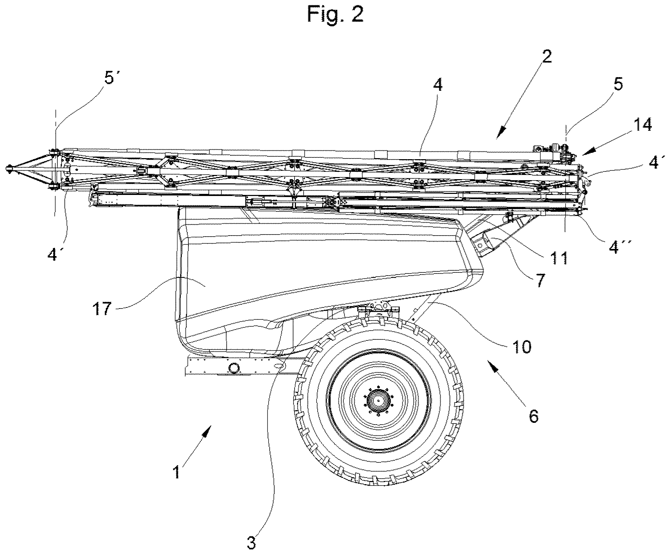

Darüber hinaus weist die Anordnung des Gelenks mit der Achse 5a senkrecht zu den Gelenken mit den Achsen 5, 5' den Vorteil auf, dass in der Transportposition eine Reduktion der Breite aufgrund eines kompakteren Anlegens des Ausbringauslegers an die Feldspritze möglich ist. Dies wird später mit Bezug zu Figur 2 beschrieben und rechtfertigt den Nachteil einer geringeren Stabilität hinsichtlich der Gierbewegung der Feldspritze 1.

Der Ausbringausleger 2 ist dreieckig im Querschnitt und weist eine Unterfläche auf, die mit Düsen versehen ist. Die Düsen sind über nicht dargestellte Fördereinrichtungen mit einem oder mehreren Tanks 17 in der Feldspritze 1 an dem Rahmen 3 fluidverbunden und bringen den auf das Feld auszubringenden Stoff aus.

Wenn die Feldspritze in die in Figur 2 dargestellte Transportposition überführt wird, wird zunächst ein Aktor, der die Segmente 4" und 4' gegeneinander über das Gelenk mit der Achse 5a verschwenkt, betätigt, sodass das Element 4" an das Element 4' angelegt ist. Danach wird der Dreh-Hebemechanismus 6 betätigt, sodass der Ausbringausleger 2 um eine Achse gedreht wird, die parallel zu der Radachse 16 liegt. Hierbei handelt es sich, wenn die Feldspritze auf einem ebenen Untergrund steht, um eine Drehung von 90 um die vorgenannte Achse, sodass die Achsen 5 und 5' nun parallel zur Gierachse 15 ausgerichtet sind.

Danach werden durch einen Aktor 13, der die Elemente 4 und 4' gegeneinander über das Gelenk mit der Achse 5' verschwenken kann, das Element 4' gegen das Element 4 geklappt. Als nächstes wird dann ein Aktor 12 betätigt, um das Elemente 4, an welches die beiden Elemente 4' und 4" angelegt sind, gegen die Feldspritze 1 anzulegen, sodass die Feldspritze 1 sich nun in einer Transportposition befindet. Die andere Seite des Ausbringauslegers 2 (die Seite ohne Bezugszeichen in Figur 1) wird entsprechend gegen die Feldspritze 1 angelegt. Es ist bevorzugt, dass die andere Seite des Ausbringauslegers 2 symmetrisch und gleichzeitig mit der beschriebenen Seite des Ausbringauslegers 2 betätigt wird, um den Schwerpunkt mittig zur Feldspritze 1 beizubehalten.

Figur 2 zeigt eine Feldspritze 1 in ihrer Transportposition. In der Transportposition ist der Ausbringausleger 2 an die Feldspritze 1 angelegt. In der bevorzugten Ausführungsform ist das äußerste Element 4" des Ausbringauslegers 2 unter das zweite Element 4' des Ausbringauslegers 2 um die Achse 5a geklappt. Das Element 4' ist gegen das Element 4, das in Figur 2 durch das Element 4' verdeckt ist, angelegt.

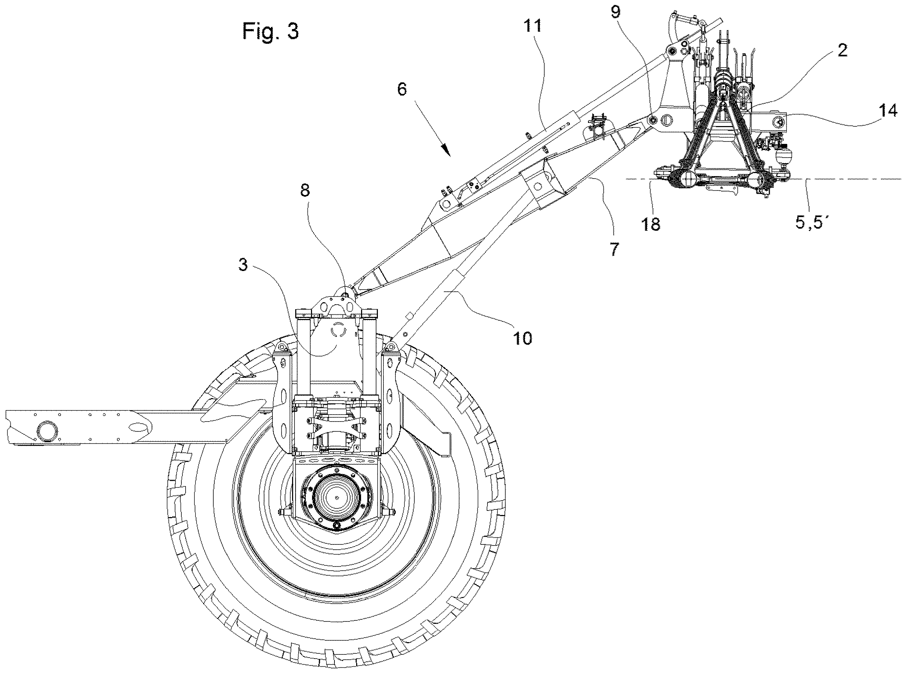

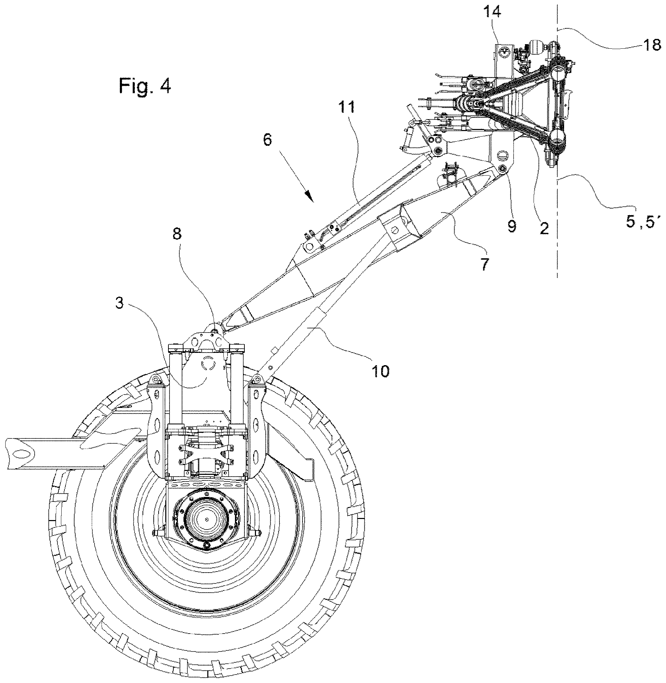

Im Folgenden wird der Dreh-Hebemechanismus 6 mit Bezug auf Figuren 3 und 4 beschrieben. Figur 3 zeigt den Dreh-Hebemechanismus 6 in einer bevorzugten Ausführungsform und in der Ausbringposition des Ausbringauslegers 2. Der Dreh-Hebemechanismus 6 umfasst einen ersten Aktor 10, einen Arm 7 und einen zweiten Aktor 11.

Der Arm 7 des Dreh-Hebemechanismus 6 ist an einem Ende 8 mit dem Rahmen 3 der Feldspritze 1 verbunden und mit seinem zweiten Ende 9 mit dem Mittelteil 14 des Ausbringauslegers 2 verbunden. Die Verbindungen am ersten Ende 8 und zweiten Ende 9 sind jeweils so ausgeführt, dass eine Drehung des Arms 7 um das erste Ende 8 und das zweite Ende 9 möglich ist.

Der erste Aktor 10 ist an einem Ende mit dem Rahmen 3 der Feldspritze 1 drehbar verbunden und an seinem zweiten Ende mit dem Arm 7 drehbar verbunden. In der bevorzugten Ausführungsform ist der zweite Aktor 11 an einem Ende drehbar mit dem Arm 7 verbunden und an seinem anderen Ende drehbar mit dem Mittelteil 14 des Ausbringauslegers 2 verbunden. Der zweite Aktor kann jedoch auch an einem Ende drehbar mit dem Rahmen 3 und an seinem anderen Ende drehbar mit dem Mittelteil 14 des Ausbringauslegers 2 verbunden sein.

Ein Anheben und Absenken des Ausbringauslegers 2 ist durch eine Betätigung des ersten Aktors 10 möglich. Indem der erste Aktor 10 vollständig eingefahren wird, senkt sich der Arm 7 ab, sodass die Höhe des Ausbringauslegers 2 reduziert und dieser nach unten verlagert wird. Durch ein Ausfahren des ersten Aktors 10 wird das zweite Ende 9 des Arms 7 angehoben, sodass der Ausbringausleger 2, der an dem zweiten Ende 9 des Arms angebracht ist, auch angehoben wird.

Wird lediglich der erste Aktor 10 betätigt, wird der Ausbringausleger 2 so angehoben und abgesenkt, dass sich der Winkel der Ebene 18, in der die Achsen 5 und 5' liegen und die sich durch die Unterfläche des Ausbringauslegers 2 erstreckt, relativ zum Rahmen 3 und der Standfläche der Feldspritze 1 ändert.

Wenn der zweite Aktor 11 in der Position verbleibt, die in Figur 3 gezeigt ist, wird durch ein Absenken des zweiten Endes 9 des Arms 7 die Ebene 18 abgesenkt und gleichzeitig so gedreht, dass die in Figur 3 rechte Seite der Ebene 18 relativ zu ihrer linken Seite weiter abgesenkt ist. Umgekehrt wird bei einem Betätigen des ersten Aktors 10, sodass das zweite Ende 9 des Arms 7 angehoben wird, gleichzeitig der Ausbringausleger so gedreht, dass die in Figur 3 linke Seite der Ebene 18 relativ zu ihrer rechten Seite abgesenkt ist.

Um dieses Verdrehen der Ebene 18 zu kompensieren, wird der zweite Aktor 11 so betätigt, dass die oben beschriebene Drehung ausgeglichen wird. Insbesondere wird bei einem Absenken des zweiten Endes 9 des Arms 7 der zweite Aktor 11 so betätigt (im Fall eines wie hier gezeigten Hydraulikzylinders eingefahren), dass das Mittelteil 14 des Ausbringauslegers 2 um das zweite Ende 9 des Arms 7 geschwenkt wird, sodass die Drehung der Ebene 18 ausgeglichen wird und lediglich ein Anheben und Absenken des Ausbringauslegers 2 stattfindet. Bei einem Anheben des Ausbringauslegers durch ein Betätigen des ersten Aktors 10, sodass der Arm 7 um sein erstes Ende 8 geschwenkt wird, wird eine Drehung der Ebene 18 durch ein Ausfahren des Aktors 11 ausgeglichen. Dieser Ausgleich bildet im Betrieb eine Parallelführung zwischen dem Rahmen 3 der Feldspritze 1 und dem Ausbringausleger 2.

Darüber hinaus kann durch eine Betätigung des zweiten Aktors 11 auch eine Hangneigung ausgeglichen werden, sodass die Ebene 18 entsprechend der Hangneigung nachgeführt wird, sodass die Aufbringbedingungen der Hangneigung entsprechend angepasst werden können.

Weiterhin kann durch ein Betätigen des zweiten Aktors 11, wie in Figur 4 dargestellt ist, der Ausbringausleger 2 und insbesondere der Mitteteil 14, der mit dem zweiten Ende 9 des Arms 7 verbunden ist, um das zweite Ende 9 gedreht werden, sodass die Achse 5 und folglich auch die Achse 5' parallel zu einer Gierachse 15 ausgerichtet sind.

Es ist also durch die Betätigung des zweiten Aktors 11 möglich, den Ausbringausleger 2 so zu drehen, dass dieser von seiner Ausbringposition in seine Transportposition oder umgekehrt überführt werden kann, ohne dass die Aktoren 12 und 13 gegen die Schwerkraft arbeiten müssen. Hierdurch ist es möglich, sowohl die Gelenke mit den Gelenkachsen 5 und 5' als auch die Aktoren 12 und 13 kleiner zu dimensionieren, weil eine Schwenkbewegung nur in einer Ebene stattfindet, deren Normalenvektor senkrecht oder, im Falle einer Hanglage, nahezu senkrecht zu der Schwerkraft liegt.

Um den Winkel des Ausbringauslegers 2 relativ zu dem Rahmen 3 und insbesondere auch zum Untergrund, auf dem die Feldspritze steht, zu bestimmen, können verschiedene Sensoren eingesetzt werden. An den Gelenken am ersten und zweiten Ende 8 und 9 des Arms 7 können Winkelsensoren angebracht werden, sodass der Winkel des Arms 7 relativ zu dem Rahmen 3 und der Winkel des Ausbringauslegers 2 relativ zu dem Arm 7 bestimmt werden können. Durch einen Beschleunigungssensor oder eine Dosenlibelle am Rahmen 3 der Feldspritz 1 kann der Winkel des Untergrunds, auf dem die Feldspritze 1 steht, bestimmt werden, sodass über dem zweiten Aktor 11 der Winkel des Ausbringauslegers 2 nicht nur relativ zu dem Rahmen 3 sondern auch mit Bezug auf den Untergrund ausgerichtet werden kann.

Alternativ und zusätzlich kann der Winkel zwischen Rahmen 3 und Ausbringausleger 2 auch über eine Bestimmung der Ausdehnungslänge des ersten Aktors 10 und des zweiten Aktors 11 erfolgen. Alternativ und zusätzlich kann auch die Feldspritze 1 selbst mit einem Beschleunigungssensor und der Ausbringausleger 2 mit einem zweiten Beschleunigungssensor bestückt sein, sodass die Winkel dieser getrennt voneinander bestimmt werden können.

Unabhängig von dem angewendeten Verfahren zur Bestimmung der Messwerte werden die gewonnen Daten in einer Steuerung ausgewertet. Die Steuerung kann entweder als Teil der Feldspritze 1 ausgebildet sein oder kann an einem Zugfahrzeug bereitgestellt werden. In beiden Fällen werden die Sensoren zur Gewinnung der Messdaten mit der Steuerung geeignet verbunden. Die Steuerung kann dann aufgrund der gemessenen Werte den Ausbringausleger 2 geeignet steuern und nachführen.

Der Dreh-Hebemechanismus 6 kann so ausgestaltet sein, dass, wenn der Ausbringausleger 2 in der Ausbringposition ist, d.h. die Achsen 5 und 5' senkrecht zur Gierachse 15 der Feldspritze 1 ausgerichtet sind, der erste Aktor 10 und der zweite Aktor 11 in einer Gleichlaufschaltung geschaltet sind, sodass der Ausbringausleger 2 bei einer Höhenverstellung des Ausbringauslegers 2 über den Dreh-Hebemechanismus 6 parallelverschoben wird. Es ist in diesem Fall bevorzugt, dass der zweite Aktor 11 als ein Doppel- oder Schwimmkolbenzylinder und der erste Aktor 10 als ein Hydraulikzylinder ausgestaltet ist.

Wenn der zweite Aktor 11 als ein Doppelkolbenzylinder ausgestaltet ist, dann kann ein Kolben mit dem Aktor 10, der in dieser Ausführungsform ein Hydraulikzylinder ist, verbunden werden, sodass der eine Kolben des Doppelkolbenzylinders eine Parallelführung sicherstellt, wenn der Ausbringausleger 2 durch den Aktor 10 in seiner Höhe verstellt wird. Der zweite Kolben des Doppelkolbenzylinders wird dann für die oben beschriebene Winkelkorrektur und das Drehen von der Ausbringposition zu der Transportposition oder umgekehrt verwendet.

Insbesondere kann der erste Aktor 10 auch ein Hydraulikzylinder sein, bei dem ein durch eine Verstellung des Aktors 10 verdrängtes Hydraulikfluid in den ersten oder zweiten Kolben des Doppelkolbenzylinders eingeführt wird, sodass durch das aus dem ersten Aktor 11 verdrängte Hydraulikfluid eine Parallelführung des Ausbringauslegers 2 sichergestellt wird. Auch hier wird der andere des ersten und zweiten Kolbens des Doppelkolbenzylinders dann für die oben beschriebene Winkelkorrektur und das Drehen von der Ausbringposition in die Transportposition oder umgekehrt verwendet.

Alternativ und zusätzlich kann der zweite Aktor 11 als ein Schwimmkolbenzylinder ausgestaltet sein. In einem Schwimmkolbenzylinder existieren zwei Volumina für ein Hydraulikfluid, wobei in aller Regel ein Volumen zwischen einer Innenwand und einem Kolben, dem sogenannten Schwimmkolben, und ein zweites Volumen zwischen dem Schwimmkolben und dem Kolben, der aus dem Zylinder heraustritt, vorhanden ist.

Hier kann eines der Volumina in dem Fall, in dem der erste Aktor 10 ein Hydraulikzylinder ist, mit dem Aktor 10 gekoppelt werden, sodass ein aus dem Aktor 10 verdrängtes Hydraulikfluid in eines der beiden Volumina des Schwimmkolbenzylinders eingeführt wird, sodass entweder der Schwimmkolben und der nach außen austretende Kolben gemeinsam verschoben werden oder nur der nach außen austretende Kolben verschoben wird, abhängig davon, mit welchem der beiden Volumina der erste Aktor 10 verbunden ist. Das mit dem ersten Aktor 10 verbundene Volumen dient dann primär dem Nachführen des Ausbringauslegers 2 im Falle einer Höhenverstellung durch den ersten Aktor 10, also der Parallelführung.

Die Bewegung des Kolbens, die durch ein Einführen des Hydraulikfluids in das andere Volumen verursacht wird, kann dann eine Drehbewegung des Ausbringauslegers 2 um das zweite Ende 9 des Arms 7 des Dreh-Hebemechanismus 6 verursachen.

## Patentansprüche

1. Feldspritze (1) mit einem Ausbringausleger (2) und einem Rahmen (3),
wobei
der Ausbringausleger (2) zwischen einer Ausbringposition und einer Transportposition verfahren werden kann,
der Ausbringausleger (2) mehrere Elemente (4) umfasst, wobei zumindest zwei benachbarte Elemente über zumindest ein Gelenk mit einer Gelenkachse (5) zueinander verschwenkbar miteinander verbunden sind,
wobei der Ausbringausleger (2) über einen Dreh-Hebemechanismus (6) mit dem Rahmen(3) verbunden ist,
wobei der Dreh-Hebemechanismus (6)
einen Arm (7), an dessen erstem Ende (8) der Rahmen(3) der Feldspritze (1) angeordnet ist und an dessen zweitem Ende (9) der Ausbringausleger (2) angeordnet ist,
einen ersten Aktor (10), der mit dem Arm (7) und dem Rahmen(3) verbunden ist,
und einen zweiten Aktor (11) umfasst, der mit dem Ausbringausleger (2) verbunden ist,
sodass ein Betätigen des ersten Aktors (10) das zweite Ende (9) des Arms (7) relativ zu dem Rahmen(3) anheben und absenken kann und
ein Betätigen des zweiten Aktors (11) den Ausbringausleger (2) um das zweite Ende (9) des Arms (7) drehen kann,
**dadurch gekennzeichnet, dass**
die mehreren Elemente (4) in der Ausbringposition so ausgeschwenkt sind, dass die Gelenkachse (5) im Wesentlichen senkrecht zu einer Gierachse der Feldspritze (1) liegt, und die mehreren Elemente in der Transportposition so angeordnet sind, dass die Gelenkachse (5) im Wesentlichen parallel zu der Gierachse der Feldspritze (1) angeordnet ist, und
der Ausbringausleger (2) durch Betätigen des zweiten Aktors (11) zu der Ausbringposition und der Transportposition gedreht werden kann.

2. Feldspritze (1) nach Anspruch 1, wobei der zweite Aktor (11) mit dem Arm (7) und dem Ausbringausleger (2) verbunden ist.

3. Feldspritze (1) nach Anspruch 1 oder 2, wobei der Arm (7) und der zweite Aktor (11) so mit dem Ausbringausleger (2) verbunden sind, dass der maximale Drehwinkel zumindest etwa 90°, bevorzugt etwa 105°, beträgt.

4. Feldspritze (1) nach einem der vorhergehenden Ansprüche, wobei der Dreh-Hebemechanismus (6) mit mindestens einem Sensor und einer Steuerung ausgestattet ist und die Steuerung anhand der Messwerte des Sensors einen Neigungswinkel des Ausbringauslegers unter Verwendung des ersten oder zweiten Aktors anpassen kann, sodass die Gelenkachsen (5, 5') des Ausbringauslegers(2) senkrecht zur Schwerkraftrichtung oder parallel zur befahrenen Fläche angeordnet sind.

5. Feldspritze (1) nach Anspruch 4, wobei der Sensor ein Beschleunigungssensor ist.

6. Feldspritze (1) nach Anspruch 4, wobei ein erster Beschleunigungssensor am Rahmen (3) und ein zweiter Beschleunigungssensor am Ausbringausleger (2) angebracht sind

7. Feldspritze (1) nach einem der vorhergehenden Ansprüche, wobei der erste und/oder zweite Aktor (10, 11) als Hydraulikzylinder oder Stellmotor ausgebildet ist oder sind.

8. Feldspritze (1) nach Anspruch 7, wobei der erste und/oder zweite Aktor (10, 11) als zwei oder mehr Hydraulikzylinder ausgestaltet oder Stellmotor ist.

9. Feldspritze (1) nach einem der vorhergehenden Ansprüche, wobei der erste Aktor (10) und der zweite Aktor (11) mit einer Gleichlaufschaltung versehen sind, sodass während einer Höhenverstellung durch den ersten Aktor (10) der Ausbringausleger (2) parallel geführt wird.

10. Feldspritze (1) nach einem der vorhergehenden Ansprüche, wobei der zweite Aktor als ein Doppelzylinder oder Schwimmkolbenzylinder ausgeführt ist.

11. Feldspritze (1) nach einem der Ansprüche 1 bis 10, mit einem Ausbringausleger (2),
wobei der Ausbringausleger (2) vier Elemente (4,4") umfasst, wobei zumindest zwei benachbarte innenliegende Elemente (4,4') über zumindest ein Gelenk mit einer Gelenkachse (5, 5') zueinander verschwenkbar miteinander verbunden sind und wobei die jeweils weiter außen liegenden oder die äußersten Gelenkachsen (5a) senkrecht zu den weiter innen liegenden Gelenkachsen (5, 5') ausgerichtet sind.

## Claims

1. A field sprayer (1) comprising a spreader boom (2) and a frame (3),
wherein
the spreader boom (2) can be moved between a spreading position and a transport position,
the spreader boom (2) comprises several elements (4), wherein at least two adjacent elements are connected to one another so as to be pivotable to one another via at least one joint comprising a joint axis (5),
wherein the spreader boom (2) is connected to the frame (3) via a rotating-lifting mechanism (6),
wherein the rotating-lifting mechanism (6)
comprises an arm (7), on the first end (8) of which the frame (3) of the field sprayer (1) is arranged, and on the second end (9) of which the spreader boom (2) is arranged,
a first actuator (10), which is connected to the arm (7) and the frame (3),
and a second actuator (11), which is connected to the spreader boom (2),
so that an actuation of the first actuator (10) can lift and lower the second end (9) of the arm (7) relative to the frame (3), and
an actuation of the second actuator (11) can rotate the spreader boom (2) around the second end (9) of the arm (7),
**characterized in that**
the several elements (4) are swiveled out in the spreading position such that the joint axis (5) is located essentially perpendicular to a yaw axis of the field sprayer (1), and the plurality of elements are arranged in the transport position such that the joint axis (5) is arranged essentially parallel to the yaw axis of the field sprayer (1), and
the spreader boom (2) can be rotated to the spreading position and the transport position by actuating the second actuator (11).

2. The field sprayer (1) according to claim 1, wherein the second actuator (11) is connected to the arm (7) and the spreader boom (2).

3. The field sprayer (1) according to claim 1 or 2, wherein the arm (7) and the second actuator (11) are connected to the spreader boom (2) such that the maximum angle of rotation is at least approximately 90°, preferably approximately 105°.

4. The field sprayer (1) according to one of the preceding claims, wherein the rotating-lifting mechanism (6) is equipped with at least one sensor and a controller, and the controller can adapt an angle of inclination of the spreader boom based on the measuring values from the sensor by using the first or second actuator, so that the joint axes (5, 5') of the spreader boom (2) are arranged perpendicular to the direction of gravity or parallel to the navigated surface.

5. The field sprayer (1) according to claim 4, wherein the sensor is an acceleration sensor.

6. The field sprayer (1) according to claim 4, wherein a first acceleration sensor is attached to the frame (3), and a second acceleration sensor is attached to the spreader boom (2) .

7. The field sprayer (1) according to one of the preceding claims, wherein the first and/or second actuator (10, 11) is or are formed as hydraulic cylinder or actuating motor.

8. The field sprayer (1) according to claim 7, wherein the first and/or second actuator (10, 11) is designed as two or more hydraulic cylinder or is actuating motor.

9. The field sprayer (1) according to one of the preceding claims, wherein the first actuator (10) and the second actuator (11) are provided with a synchronization control, so that the spreader boom (2) is guided in parallel during a height adjustment by means of the first actuator (10).

10. The field sprayer (1) according to one of the preceding claims, wherein the second actuator is embodied as double cylinder or floating piston cylinder.

11. The field sprayer (1) according to one of claims 1 to 10, comprising a spreader boom (2),
wherein the spreader boom (2) comprises four elements (4, 4"), wherein at least two adjacent interior elements (4, 4') are connected to one another so as to be pivotable to one another via at least one joint comprising a joint axis (5, 5'), and wherein the respective joint axes (5a) located further outwards or the outermost joint axes (5a) are oriented perpendicular to the joint axes (5, 5') located further inwards.

## Revendications

1. Pulvérisateur agricole (1) pourvu d'une rampe d'épandage (2) et d'un cadre (3),
la rampe d'épandage (2) étant apte à être déplacée entre une position d'épandage et une position de transport,
la rampe d'épandage (2) comprenant plusieurs éléments (4), au moins deux éléments voisins étant reliés l'un à l'autre en étant pivotants l'un par rapport à l'autre par l'intermédiaire d'au moins une articulation avec un axe d'articulation (5),
la rampe d'épandage (2) étant reliée avec le cadre (3) par l'intermédiaire d'un mécanisme de rotation/levage (6),
le mécanisme de rotation/levage (6) comprenant
un bras (7), sur la première extrémité (8) duquel est placé le cadre (3) du pulvérisateur agricole (1) et sur la deuxième extrémité (9) duquel est placée la rampe d'épandage (2),
un premier actionneur (10), qui est relié avec le bras (7) et avec le cadre (3),
un deuxième actionneur (11), qui est relié avec la rampe d'épandage (2),
de sorte qu'une manœuvre du premier actionneur (10) soit susceptible de relever et d'abaisser la deuxième extrémité (9) du bras (7) par rapport au cadre (3) et
qu'une manœuvre du deuxième actionneur (11) soit susceptible de faire tourner la rampe d'épandage (2) autour de la deuxième extrémité (9) du bras (7),
**caractérisé en ce que**
dans la position d'épandage, les plusieurs éléments (4) sont déployés de telle sorte que l'axe d'articulation (5) se situe sensiblement à la perpendiculaire d'un axe de lacet du pulvérisateur agricole (1), et dans la position de transport, les plusieurs éléments sont placés de telle sorte que l'axe d'articulation (5) soit placé sensiblement à la parallèle de l'axe de lacet du pulvérisateur agricole (1), et
par manœuvre du deuxième actionneur (11), la rampe d'épandage (2) peut être tournée dans la position d'épandage et dans la position de transport.

2. Pulvérisateur agricole (1) selon la revendication 1, le deuxième actionneur (11) étant relié avec le bras (7) et avec la rampe d'épandage (2).

3. Pulvérisateur agricole (1) selon la revendication 1 ou 2, le bras (7) et le deuxième actionneur (11) étant reliés avec la rampe d'épandage (2) de telle sorte que l'angle de rotation maximal soit d'au moins 90°, de préférence d'environ 105°.

4. Pulvérisateur agricole (1) selon l'une quelconque des revendications précédentes, le mécanisme de rotation/levage (6) étant équipé d'au moins un capteur et d'un système de commande et le système de commande étant susceptible d'adapter, à l'aide des valeurs mesurées par le capteur un angle d'inclinaison de la rampe d'épandage en utilisant le premier ou le deuxième actionneur, de sorte que les axes d'articulation (5, 5') de la rampe d'épandage(2) soient placés à la perpendiculaire du sens de gravité ou à la parallèle de la surface pratiquée.

5. Pulvérisateur agricole (1) selon la revendication 4, le capteur étant un capteur d'accélération.

6. Pulvérisateur agricole (1) selon la revendication 4, un premier capteur d'accélération étant monté sur le cadre (3) et un deuxième capteur d'accélération étant monté sur la rampe d'épandage (2).

7. Pulvérisateur agricole (1) selon l'une quelconque des revendications précédentes, le premier et/ou le deuxième actionneur (10, 11) étant conçu ou conçus sous la forme d'un vérin hydraulique ou d'un servomoteur.

8. Pulvérisateur agricole (1) selon la revendication 7, le premier et/ou le deuxième actionneur (10, 11) étant conçu en tant que deux vérins hydrauliques ou plus ou en tant que servomoteur.

9. Pulvérisateur agricole (1) selon l'une quelconque des revendications précédentes, le premier actionneur (10) et le deuxième actionneur (11) étant munis d'un circuit synchrone, de sorte que pendant un réglage en hauteur par le premier actionneur (10), la rampe d'épandage (2) soit guidée à la parallèle.

10. Pulvérisateur agricole (1) selon l'une quelconque des revendications précédentes, le deuxième actionneur étant réalisé sous la forme d'un double vérin ou d'un vérin à piston flottant.

11. Pulvérisateur agricole (1) selon l'une quelconque des revendications 1 à 10, pourvu d'une rampe d'épandage (2), la rampe d'épandage (2) comprenant quatre éléments (4, 4"), au moins deux éléments (4, 4') internes voisins étant reliés l'un à l'autre en étant pivotants l'un par rapport à l'autre par l'intermédiaire d'au moins une articulation avec un axe d'articulation (5), et les axes d'articulation (5a) chaque fois situés le plus à l'extérieur ou les plus externes étant orientés à la perpendiculaire des axes d'articulation (5, 5') situés plus à l'intérieur.
